# EUROPEAN PATENT SPECIFICATION

(11) **EP 1 488 990 B1**
(45) Date of publication and mention of the grant of the patent: **01.04.2009**
(21) Application number: 04076768.3
(22) Date of filing: 16.06.2004
(51) Int. Cl.: B62D 53/06, B60P 1/64

(54) **Mobile construction for freight traffic**
Mobiler Aufbau für Lasttransporte
Construction mobile pour le transport de frêt

(30) Priority: 20.06.2003 BE 200300370
(43) Date of publication of application: 22.12.2004
(60) Divisional application: 07075899.0
(73) Proprietor: Renders S.A., 2453 Luxembourg (LU)
(72) Inventor: Renders, Franciscus Augustinus, 2382 Ravels (Poppel) (BE)
(74) Representative: Donné, Eddy

(56) References cited:
- EP-A- 0 107 746
- EP-A- 1 177 971
- FR-A- 2 264 705
- US-A- 5 794 960
- US-B1- 6 478 324

## Description

The present invention concerns a mobile construction for freight traffic.

More particularly, it concerns a mobile construction in the form of a semi-trailer, whereby this semi-trailer can be transformed, such that it can be used in a multifunctional manner.

The invention concerns a mobile construction for freight traffic, in the form of a semi-trailer, of the type that at least consists of a first part which can be coupled to a hauling vehicle; a second part which is at least largely situated behind the first part which can be moved in relation to the first part in the longitudinal direction of the construction and which is provided with wheels; and a third part which can be moved in the longitudinal direction of the construction in relation to the first as well as the second part.

Such mobile construction in the form of a semi-trailer is already known from FR 2.264.705 which discloses a semi-trailer with a telescopic chassis with three parts working telescopically together.

Transformation of such known semi-trailer is however limited to adapting the length of the central part of the chassis, the wheels at the rear of the chassis always being positioned at the rear end of the semi-trailer.

The present invention aims at a mobile construction with more possibilities for transforming the configuration of the construction for a multi-functional use.

To this end, the invention concerns a mobile construction of the above mentioned type, wherein the first part and the third part are provided with parts forming a loading platform or at least with supporting points theoretically defining such parts, whereby parts of the third part forming part of the loading platform can extend in a longitudinal direction over a length beyond the rear of the second part.

As the second part can be moved in relation to the first part, this offers the advantage that the length of the semi-trailer is variable, and that the position of the wheels can be optimally set as well as a function of the aimed distribution of load. As the third part can moreover be set in the longitudinal direction, i.e. in relation to the first as well as the second part, this results in that not only the actual position of the wheels can be adjusted, but in that also the configuration of the loading platform formed by the first part and the third part can be altered.

The first part is preferably embodied as a neck part, more particularly a neck part which can be adjusted in height, in particular between at least a position in which the part of this neck part forming the loading platform is mainly planoparallel to the part of the third part forming the loading platform and a position whereby the part of the neck part forming the loading platform is situated higher than the part of the third part forming the loading platform. As a result, extra application possibilities are created.

The invention is mainly meant for the transport of containers and it is clear that, in this case, the mobile construction will be fitted with a chassis especially designed to that end. However, this does not exclude that the invention can also be applied in other embodiments, whereby the parts forming the loading platform may consist of theoretical planes, as well as of loading platform parts that are actually closed.

According to the most preferred embodiment, the first part is made as a neck part for the transport of tunnel containers.

In order to better explain the characteristics of the invention, the following preferred embodiments are described as an example only without being limitative in any way, with reference to the accompanying drawings, in which:
figure 1 schematically represents a mobile construction according to the invention, together with a hauling vehicle part;
figure 2 represents a view according to arrow F2 in figure 1;
figure 3 represents a view analogous to that in figure 1, but for another position;
figure 4 represents a view according to arrow F4 in figure 3;
figures 5 and 6 represent views analogous to that of figure 3, but for yet two other positions;
figure 7 represents a view according to arrow F7 in figure 6;
figures 8 and 9 represent views analogous to that of figure 3, but for a variant and for two different positions;
figure 10 represents the rear part of the chassis of the mobile construction from figure 8 in perspective;
figures 11 to 13 represent another variant in different application possibilities.

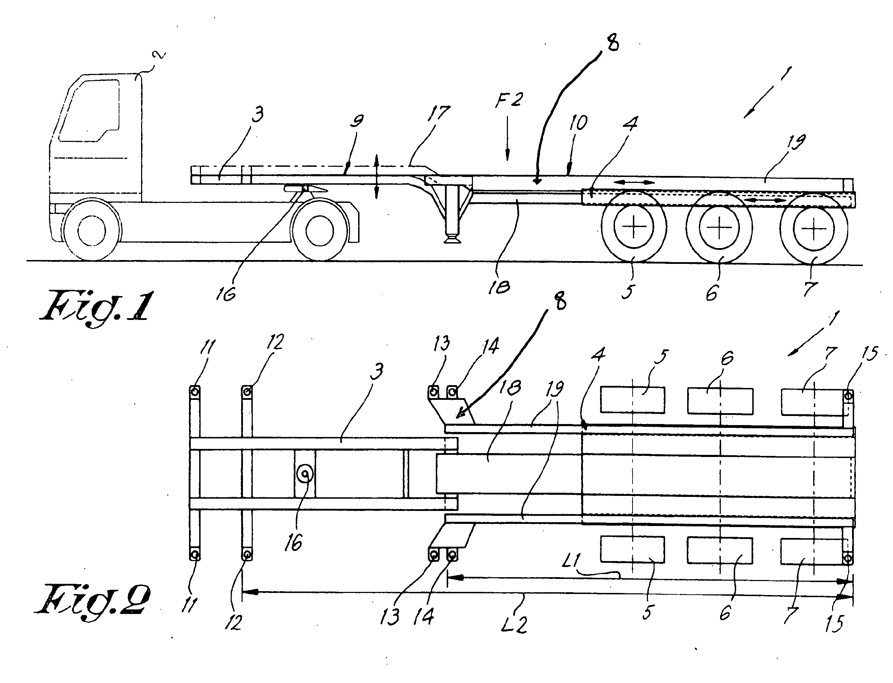

As represented in figures 1 and 2, the invention concerns a mobile construction 1 for freight traffic, in the form of a semi-trailer which can work in conjunction with a hauling vehicle part 2.

The construction 1 hereby at least consists of a first part 3 which can be coupled to the hauling vehicle part 2; a second part 4 situated at least largely behind the first part 3 and which can be moved in relation to the first part 3 in the longitudinal direction of the construction 1 and which is provided with or can be provided with wheels 5-6-7; and a third part 8 which can be moved in relation to the first part 3 as well as the second part 4 in the longitudinal direction of the construction 1.

The first part 3 and the third part 8 are provided with parts 9-10 forming loading platforms which are defined by the supporting points 11 to 15 in the given example.

The first part 3 is provided with a coupling part 16 in the form of a king pin or the like, with which it can be coupled to the hauling vehicle part 2.

The first part 3, as represented, is preferably made as a neck part, or at least largely made as a neck part.

As indicated in figure 1, the first part 3, i. e. the neck part, can be preferably adjusted in height, more particularly between a position as represented by means of a full line, whereby the parts 9-10 forming the loading platform are planoparallel to each other, and the position represented by means of a dot and dash line 17, whereby the part 9 forming the loading platform is situated higher. The neck part is hereby preferably made narrower, and it can be adjusted over such a height that the construction 1 can be used for the transport of ordinary containers as well as for the transport of what are called tunnel containers.

In order to move the second part 4 in the longitudinal direction in relation to the first part 3, it works in conjunction with a guiding part 18 coupled to the first part 3, along which it can be moved, shifted more particularly.

In order to move the third part 8 in the longitudinal direction, it is connected in a shiftable manner to the second part 4, for example as the third part 8, as represented, is provided with profiles 19 which can be shifted in the second part 4.

It is clear that, between the different parts 3, 4 and 8, there are one or several non-represented locking mechanisms, such that these parts can be mutually adjusted and locked in different positions, either or not in a continuously variable manner. Since the construction of such locking mechanisms is within the scope of the knowledge of the professional, they will not be further described.

It is also clear that the parts 3, 4 and 8 can be mutually coupled to each other in other manners according to non-represented variants. Thus, for example, the third part 8 could be guided by the guiding part 18, whereas the second part 4 can be shifted along the third part 8.

The working and the use of the construction 1 will be briefly illustrated hereafter.

In the position of figures 1 and 2, the first part 3 and the third part 8 have been shifted entirely towards each other, and the second part 4 is situated under the rear end of the third part 8. As a result is obtained a configuration which can be compared to a traditional semi-trailer construction.

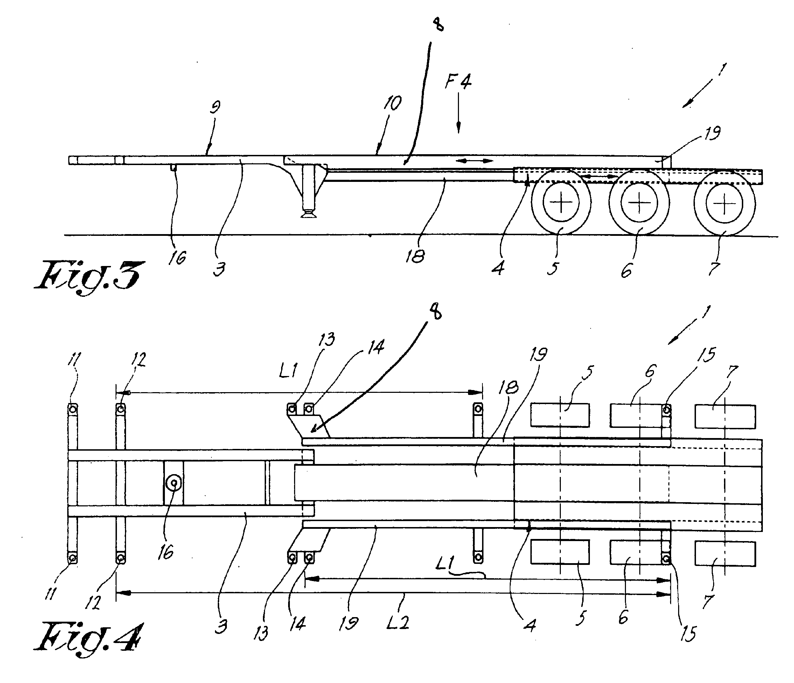

By moving the second part 4 backward is obtained a configuration, as represented in figures 3 and 4, whereby for example certain load distributions between the wheels of the hauling vehicle part 2 on the one hand, and the wheels 5-6-7 of the semi-trailer 1 on the other hand can be obtained.

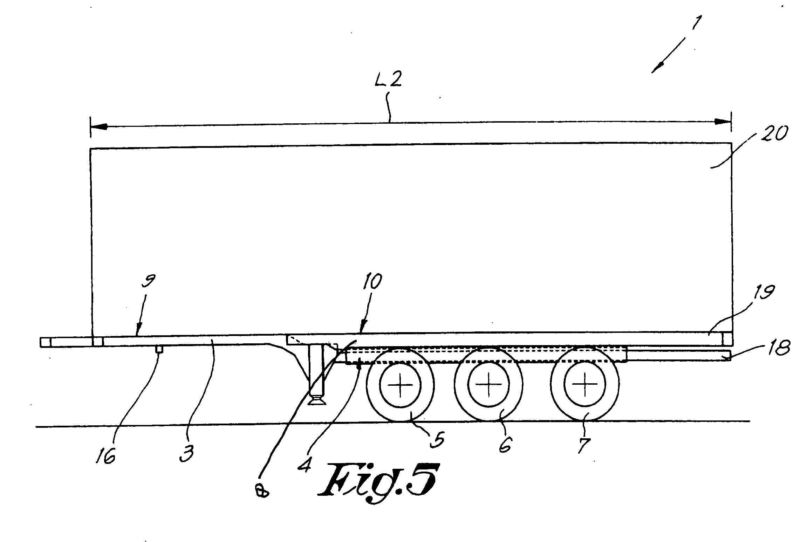

By moving the second part 4 forward, a situation as represented in figure 5 can be created, whereby the major part of the load can be brought onto the wheels 5-6-7.

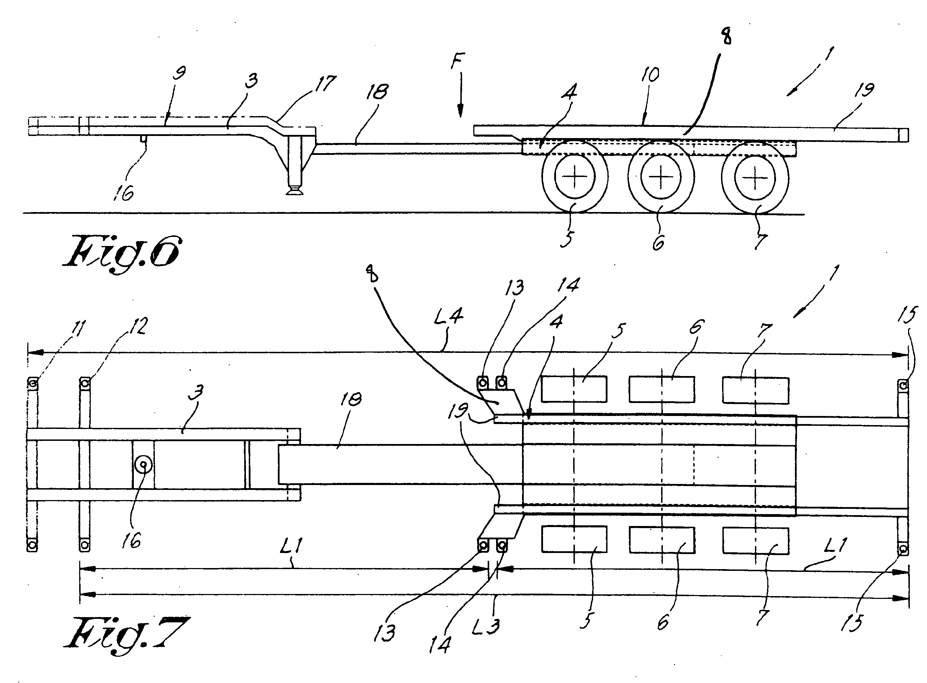

By moving not only the second part 4, but also the third part 8 backward, a configuration is obtained, as represented in figures 6 and 7, whereby the theoretical loading platform is enlarged.

In the application for the container transport, this offers many possibilities for transporting containers 20 having different shapes and lengths. As far as shapes are concerned, as mentioned above, ordinary containers as well as tunnel containers can be transported. As far as length is concerned, the number of application possibilities is practically unlimited, since the position of the wheels 5-6-7 in view of an optimal load distribution can be adjusted to the length of the container concerned on the one hand, and since also the configuration of the loading platform itself can be adjusted as a function thereof.

It should be noted that possibly also other additional supporting points can be created by means of arms which can be either or not removed.

Figures 1 to 7 schematically indicate a number of possibilities whereby the represented lengths L1, L2, L3 and L4 are respectively related to placing containers of for example 20 feet, 30 feet, 40 feet and 45 feet.

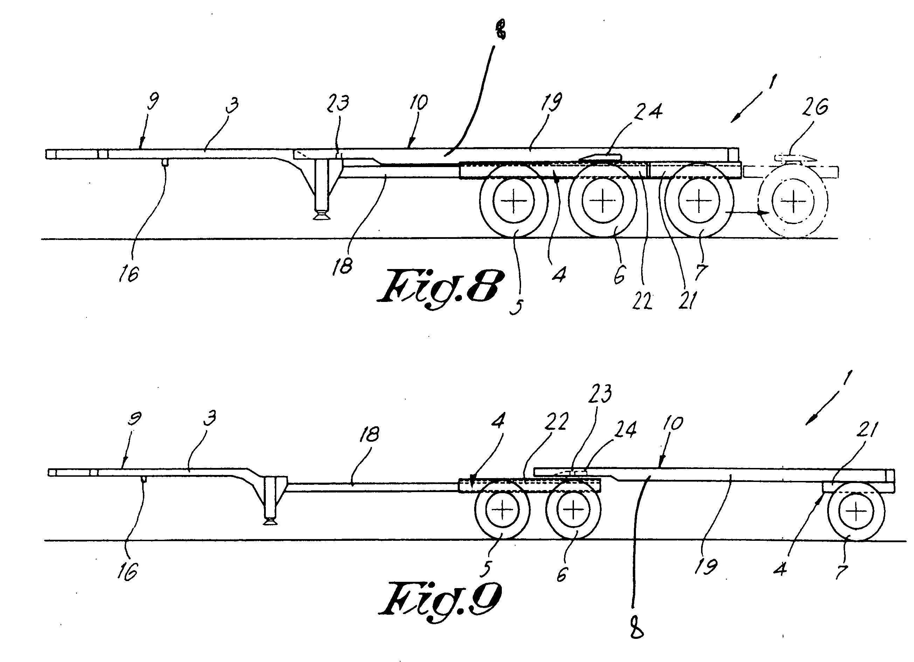

Figures 8 to 10 represent a special embodiment whereby at least a part 21 of the second part 4, comprising at least one wheel set, namely the wheels 7, can be moved backward together with the third part 8, such that the third part 8, together with the part 21, functions as a semi-trailer, whereby the part 21 forms a rear supporting point for the third part 8 functioning as a semi-trailer.

Naturally, it is important hereby that the second part 4 at least consists of two parts, namely the above-mentioned part 21 which is moved along backward, and a part 22 which serves as foremost supporting point for the third part 8 functioning as a semi-trailer, each with their own wheel sets, with wheels 5-6 on the one hand and the wheels 7 on the other hand.

In order to be able to put on the third part 8 in a hinged manner at the front, such as a semi-trailer, coupling parts 23 and 24 respectively, which can work in conjunction with each other, have been provided to the front end of the third part 8, as well as to the part 22. In the given example, the coupling part 23 consists of a king pin or the like, whereas the coupling part 24, as represented, may consist of a coupling dish which is directed with the inlet for the king pin to the front, however.

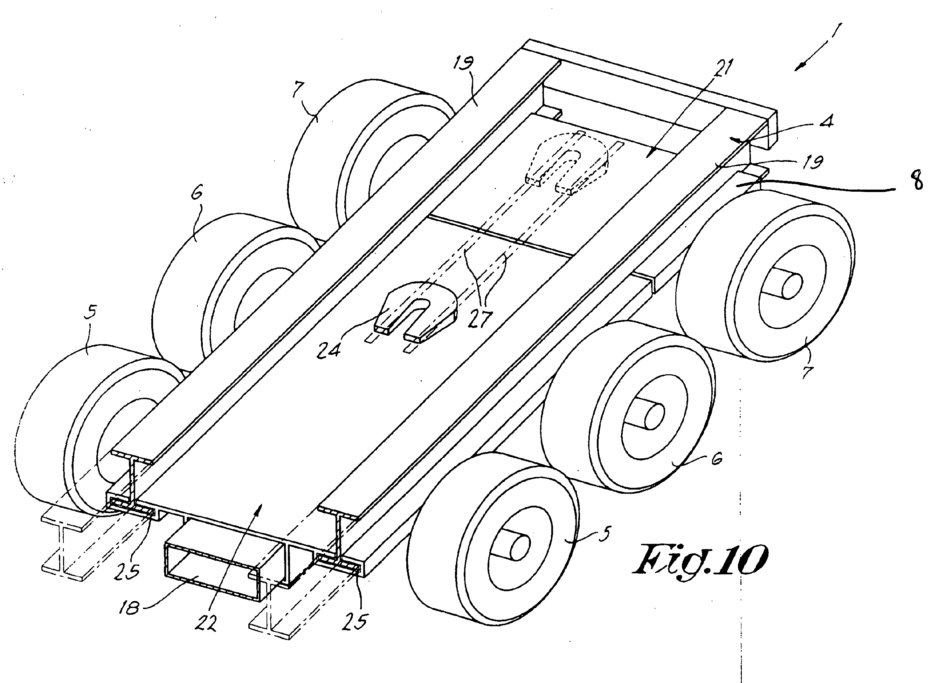

Naturally, in practice, the mutual movability of the different parts can be realised in different ways. For clarity's sake, however, figure 10 represents a more detailed embodiment of the rear part from figure 8. The guiding part 18 hereby consists of a tubular profile, over which the parts 21 and 22 can be shifted. The profiles 19 of the third part 8 work in conjunction with longitudinal guides 25 at the parts 21 and 22.

The working of the embodiment from figures 8 to 10 is mainly as follows. When using a single-shaped semi-trailer, the parts 3, 4 and 8 are used in a mutual position, as represented in figure 8.

If the construction has to be transformed into a double semi-trailer, the parts 3, 4 and 8, as well as the parts 21 and 22 are brought into a mutual position, as represented in figure 9. This can for example be done, starting from the situation of figure 8, by locking the part 21 exclusively to the third part 8, and by locking the part 22 exclusively to the guiding part 18 and by subsequently moving the vehicle forward, while the brakes of the wheels 7 are enforced. As a result, the first part 3 will be drawn from under the rest of the construction 1 together with the guiding part 18 and the second part 4, until the moment when the coupling part 23 meshes in the coupling part 24. Next, the guiding part 18 can possibly be drawn somewhat forward out of the part 22, in order to obtain that the rear end of this guiding part 18 will not protrude any further than the rear end of the part 22. Finally, a situation as represented in figure 9 is then obtained.

According to a variant, the construction 1 may also be designed such that for example the second part 4 can be presented up to behind the third part 8 with a coupling dish 26 or the like, such that a traditional semi-trailer can be attached to it. This possibility is schematically represented by means of an axis in figure 8. It is not excluded hereby that the coupling part 24 and the coupling dish 26 are formed of one and the same dish which is for example reversible, in other words which can be turned with its entry to the front as well as to the back.

Possibly, the coupling part 24 can also be moved in height and in the longitudinal direction, the latter for example along guides 27 which are schematically represented in figure 10.

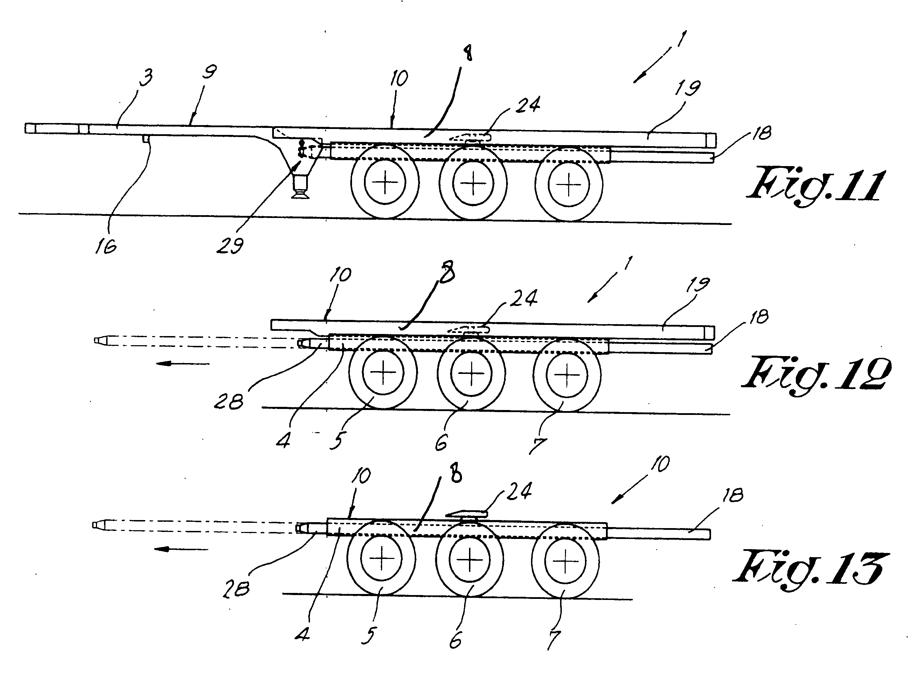

Figures 11 to 13 represent a special embodiment whereby the second part 4 is provided with a pole 28 or the like, which in the given example also has the function of a guiding part 18.

The guiding part 18, or thus the pole 28, is coupled to the first part 3 in a detachable manner via coupling means 29. Apart from the above-described configurations, this construction allows for additional special configurations, as in the figures 12 and 13.

According to figure 12, the second part 4, including the pole 28, is disconnected from the rest of the construction 1 together with the third part 8, such that a configuration is obtained which can be used as a central axis trailer, at least when the pole 28 is pulled out to the front.

By also removing the third part 8, as represented in figure 13, a configuration is obtained which can be used as a dolly.

It should be noted that, in the case of the embodiment according to figure 9, the guiding part 18 is replaced by a pole 28, after this pole 28 has been disconnected at its front, a configuration is obtained which can be used a trailer.

It is clear that the above-mentioned coupling means 29 are made such that, in the situation of figure 11, a rigid coupling is obtained between the pole 28 and the first part 3. Naturally, the front end of the pole 28 must hereby not be coupled directly to the first part 3, but it may for example also be coupled with an intermediate part which is in turn coupled to the first part 3. The first part 3 can hereby be possibly adjusted in height in relation to said intermediate part, such that the first part 3 can also function as a neck part which can be adjusted in height.

## Claims

1. Mobile construction for freight traffic, in the form of a semi-trailer, that at least consists of a first part (3) which can be coupled to a hauling vehicle (2); a second part (4) which is at least largely situated behind the first part (3) which can be moved in relation to the first part (3) in the longitudinal direction of the construction (1) and which is provided with wheels (5-6-7); and a third part (8) which can be moved in the longitudinal direction of the construction (1) in relation to the first part (3) as well as to the second part (4), **characterised in that** the first part (3) and the third part (8) are provided with parts (9-10) forming a loading platform, or at least with supporting points (11-12-13-14-15) theoretically defining such parts (9-10) and **in that** parts of the third part (8) forming part of the loading platform can extend in a longitudinal direction over a length beyond the rear of the second part (4).

2. Mobile construction according to claim 1, **characterised in that** the first part (3) is provided with a coupling part (16) in the shape of a king pin or the like.

3. Mobile construction according to any of the preceding claims, **characterised in that** the first part (3) is made as a neck part.

4. Mobile construction according to claim 3, **characterised in that** the neck part can be adjusted in height.

5. Mobile construction according to any of the preceding claims, **characterised in that** the third part (8), in order to be able to move it in the longitudinal direction, can be shifted along longitudinal guides (25) provided on the second part (4).

6. Mobile construction according to any of the preceding claims, **characterised in that** the second part (4) is provided with a coupling part (24) for a semi-trailer, such as a coupling dish or the like.

7. Mobile construction according to any of the preceding claims, **characterised in that** the third part (8) can be moved backward, such that it can be used in the form of a semi-trailer, whereby at least a part (21) of the second part (4) to this end forms a foremost supporting point.

8. Mobile construction according to claim 7, **characterised in that** at least a part (21) of the second part (4), comprising at least one set of wheels, can be moved along backward together with the third part (8), such that it forms a rear supporting point for the third part (8) functioning as a semi-trailer.

9. Mobile construction according to any of the preceding claims, **characterised in that** the second part (4) comprises several axes, and respective wheels (5-6-7), and **in that** this second part (4) at least consists of two parts (21-22) situated behind each other, with respective axes and wheels (5-6; 7), such that these parts (21-22) can be positioned in different positions in relation to each other.

10. Mobile construction according to any of the preceding claims, **characterised in that** the second part (4), in order to move it in the longitudinal direction in relation to the first part (3), works in conjunction with a guiding part (18) coupled to the first part (3), along which the second part (4) can be moved, can be shifted respectively.

11. Mobile construction according to any of the preceding claims, **characterised in that** the second part (4) is provided with a pole (28) or the like.

12. Mobile construction according to claims 10 and 11, **characterised in that** the above-mentioned pole (28) is formed of the above-mentioned guiding part (18).

13. Mobile construction according to claim 11 or 12, **characterised in that** the second part (4), together with the third part (8), is configured such that these parts (4-8) can be detached from the rest of the construction (1) and can be used as a central axis trailer.

14. Mobile construction according to any of claims 11 to 13, **characterised in that** the second part (4) is configured such that it can be detached from the rest of the construction (1) and can be used as a dolly.

15. Mobile construction according to any of the preceding claims, **characterised in that** it is fitted with a chassis for the transport of containers.

16. Mobile construction according to claim 15, **characterised in that** the first part (3) is made as a neck part for the transport of tunnel containers.

## Patentansprüche

1. Verfahrbare Konstruktion für Frachtverkehr, in Form eines Aufliegers, der mindestens aus einem ersten Teil (3) besteht, das an ein Zugfahrzeug (2) gekoppelt werden kann; einem zweiten Teil (4), das sich mindestens zum größten Teil hinter dem ersten Teil (3) befindet, das in Bezug auf das erste Teil (3) in der Längsrichtung der Konstruktion (1) bewegt werden kann und das mit Rädern (5-6-7) versehen ist; und einem dritten Teil (8), das sowohl in Bezug auf das erste Teil (3) als auch das zweite Teil (4) in der Längsrichtung der Konstruktion (1) bewegt werden kann, **dadurch gekennzeichnet, dass** das erste Teil (3) und das dritte Teil (8) mit Teilen (9-10) versehen sind, die eine Ladefläche bilden, oder mindestens mit Stützpunkten (11-12-13-14-15), die theoretisch solche Teile (9-10) definieren, und dass Teile des dritten Teils (8), die Teil der Ladefläche sind, sich in einer Längsrichtung über eine Länge über das Hinterende des zweiten Teils (4) hinaus erstrecken können.

2. Verfahrbare Konstruktion nach Anspruch 1, **dadurch gekennzeichnet, dass** das erste Teil (3) mit einem Kupplungsteil (16) in Form eines Zugsattelzapfens oder dergleichen versehen ist.

3. Verfahrbare Konstruktion nach einem der vorgenannten Ansprüche, **dadurch gekennzeichnet, dass** das erste Teil (3) als Halsteil ausgeführt ist.

4. Verfahrbare Konstruktion nach Anspruch 3, **dadurch gekennzeichnet, dass** das Halsteil höhenverstellbar ist.

5. Verfahrbare Konstruktion nach einem der vorgenannten Ansprüche, **dadurch gekennzeichnet, dass** das dritte Teil (8), um es in Längsrichtung bewegen zu können, entlang an dem zweiten Teil (4) angebrachten Längsführungen (25) verschiebbar ist.

6. Verfahrbare Konstruktion nach einem der vorgenannten Ansprüche, **dadurch gekennzeichnet, dass** das zweite Teil (4) mit einem Kupplungsteil (24) für einen Auflieger, wie etwa einer Sattelkupplung oder dergleichen, versehen ist.

7. Verfahrbare Konstruktion nach einem der vorgenannten Ansprüche, **dadurch gekennzeichnet, dass** das dritte Teil (8) nach hinten bewegt werden kann, sodass es in Form eines Aufliegers verwendet werden kann, wobei mindestens ein Teil (21) des zweiten Teils (4) hierfür einen vordersten Stützpunkt bildet.

8. Verfahrbare Konstruktion nach Anspruch 7, **dadurch gekennzeichnet, dass** mindestens ein Teil (21) des zweiten Teils (4), das mindestens einen Satz Räder umfasst, zusammen mit dem dritten Teil (8) nach hinten bewegt werden kann, sodass es einen hinteren Stützpunkt für den als Auflieger fungierenden dritten Teil (8) bildet.

9. Verfahrbare Konstruktion nach einem der vorgenannten Ansprüche, **dadurch gekennzeichnet, dass** das zweite Teil (4) mehrere Achsen und jeweilige Räder (5-6-7) umfasst und dass dieser zweite Teil (4) mindestens aus zwei hintereinander befindlichen Teilen (21-22) besteht, mit jeweiligen Achsen und Rädern (5-6; 7), sodass diese Teile (21-22) in Bezug zueinander in verschiedenen Positionen positioniert werden können.

10. Verfahrbare Konstruktion nach einem der vorgenannten Ansprüche, **dadurch gekennzeichnet, dass** der zweite Teil (4), um ihn in Bezug auf das erste Teil (3) in Längsrichtung zu bewegen, mit einem an das erste Teil (3) gekoppelten Führungsteil (18) zusammenwirkt, entlang dem das zweite Teil (4) bewegt, beziehungsweise verschoben werden kann.

11. Verfahrbare Konstruktion nach einem der vorgenannten Ansprüche, **dadurch gekennzeichnet, dass** das zweite Teil (4) mit einer Deichsel (28) oder dergleichen versehen ist.

12. Verfahrbare Konstruktion nach den Ansprüchen 10 und 11, **dadurch gekennzeichnet, dass** die vorgenannte Deichsel (28) von dem vorgenannten Führungsteil (18) gebildet wird.

13. Verfahrbare Konstruktion nach Anspruch 11 oder 12, **dadurch gekennzeichnet, dass** das zweite Teil (4), zusammen mit dem dritten Teil (8), so konfiguriert ist, dass diese Teile (4-8) vom Rest der Konstruktion (1) gelöst und als Mittelachsenauflieger verwendet werden können.

14. Verfahrbare Konstruktion nach einem der Ansprüche 11 bis 13, **dadurch gekennzeichnet, dass** das zweite Teil (4) so konfiguriert ist, dass es vom Rest der Konstruktion (1) gelöst und als Dolly verwendet werden kann.

15. Verfahrbare Konstruktion nach einem der vorgenannten Ansprüche, **dadurch gekennzeichnet, dass** sie mit einem Chassis für den Transport von Containern versehen ist.

16. Verfahrbare Konstruktion nach Anspruch 15, **dadurch gekennzeichnet, dass** das erste Teil (3) als Halsteil für den Transport von Tunnelcontainern ausgeführt ist.

## Revendications

1. Structure mobile pour la circulation de marchandises, sous la forme d'une semi-remorque, qui est au moins constituée par : une première partie (3) qui peut être accouplée à un véhicule tracteur (2) ; une deuxième partie (4) qui est située au moins largement derrière la première partie (3), qui peut être déplacée par rapport à la première partie (3) dans la direction longitudinale de la structure (1) et qui est équipée de roues (5-6-7) ; et une troisième partie (8) qui est peut être déplacée dans la direction longitudinale de la structure (1) par rapport à la première partie (3) et également par rapport à la deuxième partie (4), **caractérisée en ce que** la première partie (3) et la troisième partie (8) sont équipées de pièces (9-10) formant une plate-forme de chargement, ou au moins de point d'appui (11-12-13-14-15) définissant en théorie lesdites pièces (9-10) ; et **en ce que** des parties de la troisième partie (8) faisant partie de la plate-forme de chargement peuvent s'étendre dans une direction longitudinale sur une longueur qui va au-delà de l'arrière de la deuxième partie (4).

2. Structure mobile selon la revendication 1, **caractérisée en ce que** la première partie (3) est équipée d'une pièce d'accouplement (16) sous la forme d'un pivot d'attelage ou analogue.

3. Structure mobile selon l'une quelconque des revendications précédentes, **caractérisée en ce que** la première partie (3) est réalisée pour obtenir un élément en forme de tourillon.

4. Structure mobile selon la revendication 3, **caractérisée en ce que** la partie en forme de tourillon peut être réglée en hauteur.

5. Structure mobile selon l'une quelconque des revendications précédentes, **caractérisée en ce que** la troisième partie (8), pour pouvoir la rendre mobile dans la direction longitudinale, peut se déplacer le long de guides longitudinaux (25) prévus sur la deuxième partie (4).

6. Structure mobile selon l'une quelconque des revendications précédentes, **caractérisée en ce que** la deuxième partie (4) est équipée d'une pièce d'accouplement (24) pour une semi-remorque, telle qu'un plateau d'accouplement ou analogue.

7. Structure mobile selon l'une quelconque des revendications précédentes, **caractérisée en ce que** la troisième partie (8) peut se déplacer vers l'arrière, si bien qu'elle peut être utilisée sous la forme d'une semi-remorque, au moins une partie (21) de la deuxième partie (4) formant à cet effet un point d'appui situé le plus à l'avant.

8. Structure mobile selon la revendication 7, **caractérisée en ce qu'**au moins une partie (21) de la deuxième partie (4), comprenant au moins un jeu de roues, peut être mise en mouvement vers l'arrière de manière conjointe avec la troisième partie (8), de façon à former un point d'appui arrière pour la troisième partie (8) agissant à la manière d'une semi-remorque.

9. Structure mobile selon l'une quelconque des revendications précédentes, **caractérisée en ce que** la deuxième partie (4) comprend plusieurs axes et plusieurs roues respectives (5-6-7), et **en ce que** cette deuxième partie (4) est au moins constituée par deux parties (21-22) qui sont situées l'une derrière l'autre, avec des axes et des roues respectives (5-6 ; 7) de telle sorte que ces parties (21-22) peuvent être mises à des positions différentes l'une par rapport à l'autre.

10. Structure mobile selon l'une quelconque des revendications précédentes, **caractérisée en ce que** la deuxième partie (4), pour pouvoir la rendre mobile dans la direction longitudinale par rapport à la première partie (3), travaille de manière conjointe avec un élément de guidage (18) accouplé à la première partie (3), le long duquel la deuxième partie (4) peut être rendue mobile, peut se déplacer, respectivement.

11. Structure mobile selon l'une quelconque des revendications précédentes, **caractérisée en ce que** la deuxième partie (4) est équipée d'une perche (28) ou analogue.

12. Structure mobile selon les revendications 10 et 11, **caractérisée en ce que** la perche susmentionnée (28) est formée par l'élément de guidage susmentionné (18).

13. Structure mobile selon la revendication 11 ou 12, **caractérisée en ce que** la deuxième partie (4), de manière conjointe avec la troisième partie (8), est configurée de telle sorte que ces parties (4-8) peuvent se détacher du reste de la structure (1) et peuvent être utilisées pour faire office de semi-remorque à axe central.

14. Structure mobile selon l'une quelconque des revendications 11 à 13, **caractérisée en ce que** la deuxième partie (4) est configurée de telle sorte qu'elle peut être détachée du reste de la structure (1) et de telle sorte qu'elle peut être utilisée pour faire office de diabolo convertisseur.

15. Structure mobile selon l'une quelconque des revendications précédentes, **caractérisée en ce qu'**elle est équipée d'un châssis pour le transport de conteneurs.

16. Structure mobile selon la revendication 15, **caractérisée en ce que** la première partie (3) est réalisée pour obtenir un élément en forme de tourillon pour le transport de conteneurs avec tunnels.
